# EUROPEAN PATENT APPLICATION

(11) **EP 4 726 852 A1**
(43) Date of publication of application: **15.04.2026**
(21) Application number: 25203624.9
(22) Date of filing: 22.09.2025
(51) Int. Cl.: H01M 10/42, H01M 50/284

(54) **BATTERY MODULE AND MOBILE DEVICE INCLUDING THE SAME**

(30) Priority: 11.10.2024 KR 20240138569
(71) Applicant: SAMSUNG SDI CO., LTD., Yongin-si, Gyeonggi-do 17084 (KR)
(72) Inventor: JEON, Seoyeon, Yongin-si, Gyeonggi-do 17084 (KR)
(74) Representative: Gulde & Partner

(57) **Abstract**

A battery module (10) includes: a frame (100) including a cell mounting portion (110) on which a battery cell (300) is mounted, and a board mounting portion (120) connected to a side of the cell mounting portion (110). The battery module (10) includes a protection circuit board portion (200) electrically connected to the battery cell (300) and mounted on the board mounting portion (200). The board mounting portion (200) includes a contact support portion (121) protruding toward an inside of the board mounting portion (200) and contacting and supporting the protection circuit board portion (200).

## Description

### BACKGROUND

### 1. Field

Aspects of embodiments of the present disclosure relate to a battery module and a mobile device including the same.

### 2. Description of the Related Art

A secondary battery is chargeable and dischargeable, different from a primary battery that is not designed to be recharged. As technology development and demand for mobile devices increased, the demand for batteries as an energy source is rapidly increasing.

Generally, low-capacity secondary batteries are used in portable electronic devices, such as smartphones, feature phones, laptop computers, digital cameras, and camcorders. As electronic devices are miniaturized, various methods for miniaturizing secondary batteries as their power sources are also in demand.

The above-described information disclosed in this section that serves as the background of the present disclosure is for improving the understanding of the background of the present disclosure, and thus, it may include information that does not constitute related (or prior) art.

### SUMMARY

Embodiments of the present disclosure provide a battery module having a slim shape while including a battery cell and a protection circuit board, and a mobile device including the battery module.

However, aspects and features of the present disclosure are not limited to the above-described aspects and features, and other aspects and features not mentioned may be clearly understood by those of ordinary skill in the art from the description of the present disclosure described below.

According to an aspect of the present disclosure, a battery module includes a frame including a cell mounting portion on which a battery cell is mounted and a board mounting portion connected to a side of the cell mounting portion and a protection circuit board portion electrically connected to the battery cell and mounted on the board mounting portion. The board mounting portion including a contact support portion protruding toward an inside of the board mounting portion and contact-supporting the protection circuit board portion. Hence, due to the contact support portion, the battery module may be sufficiently stable despite being slim.

In an embodiment, the board mounting portion may accommodate the protection circuit board portion and having opposite surfaces being open. An advantage of this embodiment may be that the protection circuit board portion contributes less to the size of the battery module, facilitating that the battery module can be slim.

In an embodiment, the protection circuit board portion may include a protection circuit board configured to control voltage and current of the battery cell. The protection circuit board portion may include a coupling groove formed in a side thereof. The protection circuit board portion may include a cover tab covering the coupling groove. The contact support portion may be arranged inside the coupling groove and may contact-support the cover tab. An advantage of this embodiment may be that the coupling groove facilitates keeping the design of the battery module slim.

In an embodiment, a pair of coupling grooves may be formed in a side and in an opposite side of the protection circuit board, respectively, a pair of cover tabs may be provided, respectively covering the pair of coupling grooves, and the board mounting portion may include a pair of contact support portions protruding on inside the pair of coupling grooves to contact-support the pair of cover tabs, respectively. In other words. in an embodiment, the coupling groove may be formed in the side of the protection circuit board, and a further coupling groove may be formed in an opposite side of the protection circuit board. A further cover tab covering the further coupling groove may be provided. A further contact support portion may protrude from the board mounting portion inside the of a further coupling groove to contact and support the further cover tab. An advantage of this embodiment may be that keeping the design of the battery module slim is further facilitated.

In an embodiment, the board mounting portion may include a pair of wing portions. An electrode terminal drawn from a side of the battery cell may be arranged on the pair of wing portions. The board mounting portion may include a connection portion. The connection portion may connect the wing portions to each other. The board mounting portion may include a partition portion mounted on each of the wing portions. The partition portion may be arranged between the battery cell and the protection circuit board portion. An advantage of this embodiment may be that rigidity of the battery module is improved without affecting the slimness thereof.

In an embodiment, the partition portion may include a partition. The partition may support the battery cell. The partition may support the protection circuit board portion. The partition portion may include a reinforcing rib supporting the partition. An advantage of this embodiment may be that rigidity of the battery module is improved without affecting the slimness thereof.

In an embodiment the partition portion may include a pressing support portion. The pressing support portion may protrude toward the inside of the board mounting portion. The pressing support portion may support the protection circuit board portion in a direction opposite to a direction in which the contact support portion supports the protection circuit board portion. An advantage of this embodiment may be that rigidity of the battery module is improved without affecting the slimness thereof.

In an embodiment, the protection circuit board portion may contact the contact support portion and the pressing support portion simultaneously. An advantage of this embodiment may be that rigidity of the battery module is improved without affecting the slimness thereof.

In an embodiment the partition portion may include a catching support portion. The catching support portion may protrude toward the inside of the board mounting portion. The catching support portion may be arranged inside a catching groove formed in the protection circuit board portion. The catching support portion may support the protection circuit board portion in a direction parallel to the wing portion. An advantage of this embodiment may be that rigidity of the battery module is improved without affecting the slimness thereof.

In an embodiment, the board mounting portion may include a plurality of partition portions. At least selected of the partition portions may be arranged adjacent to each other on the wing portion. The selected partition portion may be spaced apart from each other at regular intervals. The electrode terminal may be arranged between the adjacent partition portions on the wing portions. An advantage of this embodiment may be that rigidity of the battery module is improved without affecting the slimness thereof.

According to another aspect of the present disclosure, a mobile device includes a battery module. The battery module includes a frame including a cell mounting portion on which a battery cell is mounted and a board mounting portion connected to a side of the cell mounting portion and a protection circuit board portion electrically connected to the battery cell and mounted on the board mounting portion. The board mounting portion includes a contact support portion protruding toward an inside of the board mounting portion and contact-supporting the protection circuit board portion. Hence, due to the contact support portion, the battery module may be sufficiently stable despite being slim.

In an embodiment, the board mounting portion may accommodate the protection circuit board portion and may have opposite surfaces being open. An advantage of this embodiment may be that the protection circuit board portion contributes less to the size of the battery module, facilitating that the battery module can be slim.

In an embodiment, the protection circuit board portion may include a protection circuit board configured to control voltage and current of the battery cell and includes a coupling groove formed in a side thereof and a cover tab covering the coupling groove, and the contact support portion may be arranged inside the coupling groove and may contact-support the cover tab. An advantage of this embodiment may be that the coupling groove facilitates keeping the design of the battery module slim.

In an embodiment, a pair of coupling grooves may be respectively formed in a side and an opposite side of the protection circuit board, a pair of cover tabs may be provided, respectively covering the pair of coupling grooves, and the board mounting portion may include a pair of contact support portions protruding on inside the pair of coupling grooves to contact-support the pair of cover tabs, respectively. An advantage of this embodiment may be that keeping the design of the battery module slim is further facilitated.

In an embodiment, the board mounting portion may include a pair of wing portions on which an electrode terminal drawn from a side of the battery cell is arranged, a connection portion connecting the wing portions to each other, and a partition portion mounted on each of the wing portions and arranged between the battery cell and the protection circuit board portion. An advantage of this embodiment may be that rigidity of the battery module is improved without affecting the slimness thereof.

In an embodiment, the partition portion may include a partition supporting the battery cell and the protection circuit board portion and a reinforcing rib supporting the partition. An advantage of this embodiment may be that rigidity of the battery module is improved without affecting the slimness thereof.

In an embodiment the partition portion may include a pressing support portion protruding toward the inside of the board mounting portion, and the pressing support portion may support the protection circuit board portion in a direction opposite to a direction in which the contact support portion supports the protection circuit board portion. An advantage of this embodiment may be that rigidity of the battery module is improved without affecting the slimness thereof.

In an embodiment, the protection circuit board portion may contact the contact support portion and the pressing support portion simultaneously. An advantage of this embodiment may be that rigidity of the battery module is improved without affecting the slimness thereof.

In an embodiment, the partition portion may include a catching support portion protruding toward the inside of the board mounting portion, and the catching support portion may be arranged inside a catching groove formed in the protection circuit board portion and support the protection circuit board portion in a direction parallel to the wing portion. An advantage of this embodiment may be that rigidity of the battery module is improved without affecting the slimness thereof.

In an embodiment, the board mounting portion may include a plurality of partition portions, the partition portions that are adjacent to each other on the wing portion may be spaced apart from each other at regular intervals, and the electrode terminal may be arranged between the adjacent partition portions on the wing portions. An advantage of this embodiment may be that rigidity of the battery module is improved without affecting the slimness thereof.

The terms contact-supporting and contact-support may mean that one element, e.g. the contact support portion etc., contacts and supports another element, e.g. the protection circuit board portion etc. The contact may be linear or an areal contact or an extensive contact. The element that contact-supports the other element, and the other element may at least partly be formed complementary to each other, in particular in areas or surfaces in which the elements contact each other.

### BRIEF DESCRIPTION OF THE DRAWINGS

The following drawings attached to this specification illustrate embodiments of the present disclosure and serve to further describe aspects and features of the present disclosure, together with the detailed description of the present disclosure. The present disclosure should not be construed as being limited to the embodiments shown in the drawings, in which:
FIG. 1 is a perspective view of a battery module according to an embodiment of the present disclosure;
FIG. 2 is an exploded perspective view of the battery module shown in FIG. 1;
FIG. 3 is a cross-sectional view taken along the line I-I' in FIG. 1;
FIG. 4 is an enlarged view of the portion A in FIG. 1;
FIG. 5 is an enlarged view of the portion B in FIG. 2;
FIG. 6 is an enlarged view of the portion C in FIG. 4;
FIG. 7 is an enlarged view of the portion D in FIG. 4;
FIG. 8 is a cross-sectional view taken along the line II-II' in FIG. 1; and
FIG. 9 is a cross-sectional view taken along the line III-III' in FIG. 1.

### DETAILED DESCRIPTION

Hereinafter, embodiments of the present disclosure will be described, in detail, with reference to the accompanying schematic drawings. The terms and words used in the present specification and claims should not be construed as being limited to their ordinary or dictionary meanings but should be interpreted as meanings and concepts consistent with the technical idea of the present disclosure based on the principle that the inventor(s) may appropriately define the concept of the terms to describe their invention in the best way. The embodiments described in this specification and the configurations illustrated in the drawings are some of embodiments of the present disclosure and do not represent all of the technical ideas, aspects , and features of the present disclosure, and it should be understood that there may be various equivalents and modified examples that can replace them at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. A statement that two elements are "the same" as each other may mean that they are "substantially the same" as each other. Thus, a case where they are "substantially the same" as each other may include a case where they have a deviation regarded as a low level, for example, a deviation of about 5% or less. When a uniform parameter is uniform in an area, it may mean that it is uniform from an average point of view.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

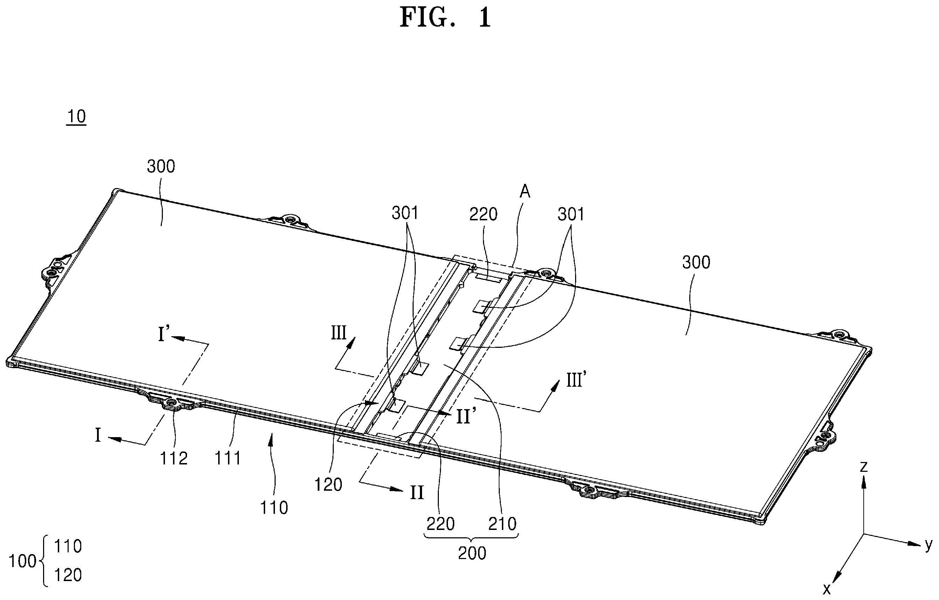

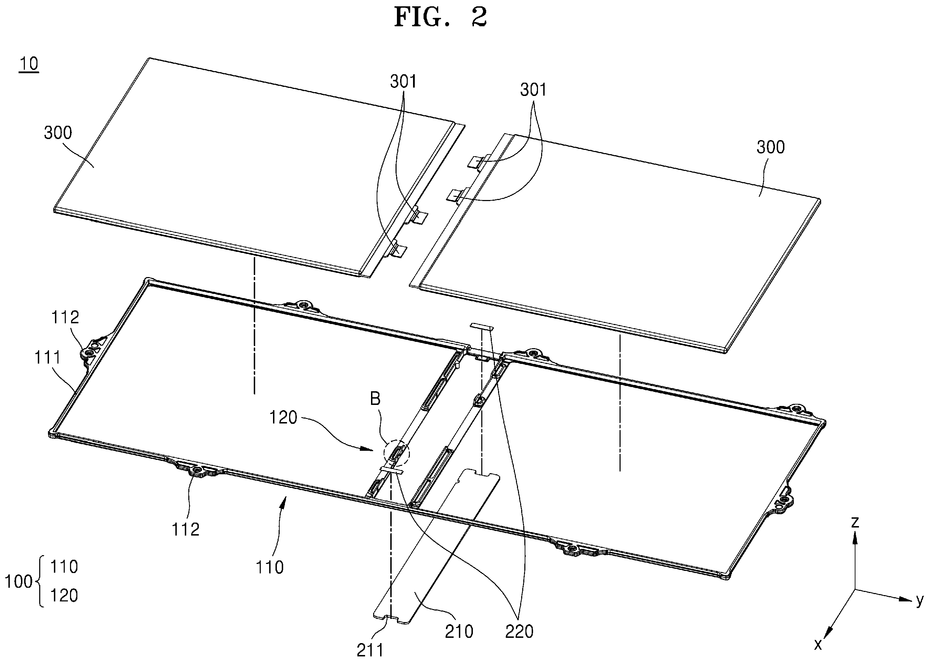

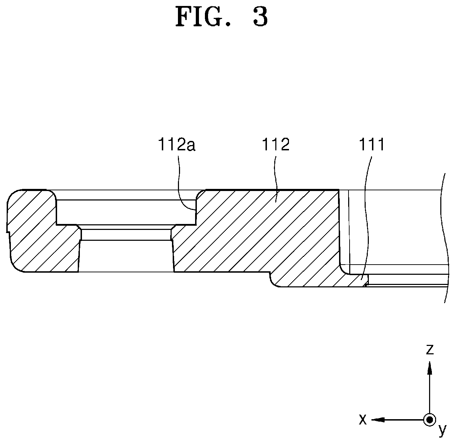

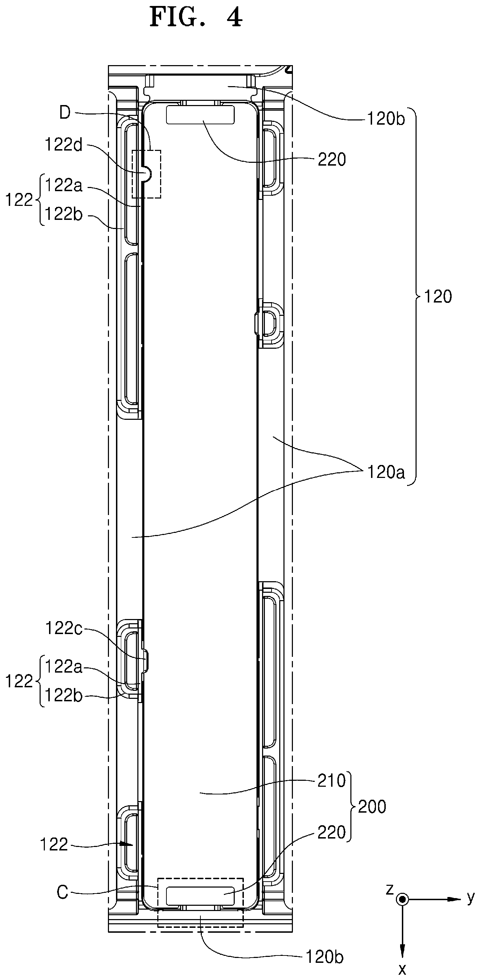

FIG. 1 shows a perspective view of a battery module according to an embodiment of the present disclosure, FIG. 2 shows an exploded perspective view of the battery module shown in FIG. 1, FIG. 3 shows a cross-sectional view taken along the line I-I' in FIG. 1, and FIG. 4 is an enlarged view showing the portion A in FIG. 1.

In the following embodiments, an x-axis, a y-axis, and a z-axis are not limited to three axes on an orthogonal coordinate system but may be interpreted in a broader sense including them. In some embodiments, the x-axis, the y-axis, and the z-axis may be orthogonal to each other but may also refer to different directions that are not orthogonal to each other. Hereinbelow, for convenience of a description, the x-axis is defined as a longitudinal (or length) direction of a protection circuit board portion 200, the y-axis is defined as a width direction of the protection circuit board portion 200, and the z-axis is defined as a thickness direction of a battery module 10.

Referring to FIGS. 1 and 2, the battery module 10, according to an embodiment of the present disclosure, may include a frame 100 on which a battery cell 300 and the protection circuit board portion 200 are mounted. The battery module 10 may have a minimum laminated structure and, thus, may be formed in a slim shape.

According to an embodiment of the present disclosure, the battery module 10 may include the frame 100, the protection circuit board portion 200, and the battery cell 300.

Referring to FIGS. 1 and 2, the frame 100 may include a cell mounting portion 110 and a board mounting portion 120.

The battery cell 300 may be mounted on the cell mounting portion 110. The cell mounting portion 110 may support the battery cell 300 on a surface thereof that comes into contact with the battery cell 300, thereby stably mounting the battery cell 300 on the cell mounting portion 110.

In some embodiments, the cell mounting portion 110 may be formed in a shape corresponding to the battery cell 300. For example, when the battery cell 300 is mounted on the cell mounting portion 110, the battery cell 300 may be supported by the cell mounting portion 110 in contact with an inner circumferential surface of the cell mounting portion 110.

Referring to FIGS. 2 and 3, a support rib 111 may be formed on (e.g., formed along a periphery of) the cell mounting portion 110. In the cell mounting portion 110, the support rib 111 may be formed to protrude toward the inside of the cell mounting portion 110 such that, when the battery cell 300 is mounted on the cell mounting portion 110, the support rib 111 may support the battery cell 300 in the thickness direction (e.g., a z-axis direction) of the battery module 10.

In some embodiments, in the cell mounting portion 110, the support rib 111 may be formed to extend along the inner circumferential surface of the cell mounting portion 110 to have a width (e.g., a predetermined width). For example, the battery cell 300 may be mounted on the cell mounting portion 110 and supported over (or along) the entire inner circumferential surface of the cell mounting portion 110. Thus, the battery cell 300 may be stably supported by the cell mounting portion 110.

Referring to FIGS. 2 and 3, the cell mounting portion 110 may include a fixing portion 112. The fixing portion 112 may be connected to the cell mounting portion 110 on a side thereof and may be configured to be connected to an external component on the other side thereof, thereby allowing the battery module 10 to be connected to the external component.

The fixing portion 112 may be connected to a side of an outer surface of the cell mounting portion 110. The fixing portion 112 may be formed on a surface opposite to another surface where the support rib 111 is formed to connect the battery module 10 to the external component without interfering with the mounting of the battery cell 300. This may allow the battery module 10 to be firmly connected to a mobile device.

In an embodiment, the fixing portion 112 may have a fixing hole (e.g., a fixing opening) 112a into which a bolt may be inserted. The bolt, passing through the fixing hole 112a, may be connected to an external component, such as a mobile device that includes the battery module 10 as a power source, thereby connecting the battery module 10 to the external component. Thus, the fixing portion 112 may fix a relative position of the battery module 10 with respect to the external component.

A method of connecting the battery module 10 to an external component, such as a mobile device including the battery module 10 as a power source, by using the fixing portion 112 is not limited to the method described above. In some embodiments, the fixing portion 112 and the external component may be connected to each other by welding.

The external component may be an electronic device that receives power from (e.g., is powered by) the battery module 10. In some embodiments, the external component may be a mobile device that uses the battery module 10 as a power source.

In an embodiment, the cell mounting portion 110 may include a plurality of fixing portions 112. In some embodiments, at least one fixing portion 112 is connected in each direction of an outer periphery of the cell mounting portion 110. Thus, the battery module 10 may be stably fixed to the external component without any shaking in relative position (e.g., without vibration) and posture with respect to the external component.

Referring to FIGS. 1 and 2, the board mounting portion 120 may be connected to a side of the cell mounting portion 110.

The board mounting portion 120 may be connected to the plurality of cell mounting portions 110. In some embodiments, the board mounting portion 120 may be arranged between a pair of cell mounting portions 110 that face each other and may be connected to each cell mounting portion 110. A pair of battery cells 300 arranged on the pair of cell mounting portions 110 may be connected to a protection circuit board 210 arranged on the board mounting portion 120 such that power control may be efficiently provided.

Referring to FIG. 4, the board mounting portion 120 may have a wing portion 120a and a connection portion 120b.

The wing portion 120a may receive an electrode terminal 301 (see, e.g., FIG. 2) drawn from a side of the battery cell 300. In some embodiments, the wing portion 120a may be arranged between the protection circuit board portion 200 and the battery cell 300, and the electrode terminal 301 drawn from the battery cell 300 having a width may be arranged on the protection circuit board portion 200. Thus, the electrode terminal 301, when connected to the protection circuit board 210, may be supported in contact by the wing portion 120a.

The connection portion 120b may connect the pair of wing portions 120a to each other. In some embodiments, the connection portion 120b may connect ends of the wing portions 120a to each other, thereby fixing the relative position of each wing portion 120a.

In some embodiments, the connection portion 120b may be provided in a pair and may firmly connect the pair of wing portions 120a. In some embodiments, a pair of connection portions 120b may connect an end and the other end of each wing portion 120a to each other, thereby improving the structural stability of the board mounting portion 120.

Referring to FIGS. 2 and 3, the board mounting portion 120 may accommodate the protection circuit board portion 200. In some embodiments, the board mounting portion 120 may form a space surrounded by (e.g., surrounded along its periphery by) the pair of wing portions 120a and the pair of connection portions 120b, thereby accommodating the protection circuit board 210 therein.

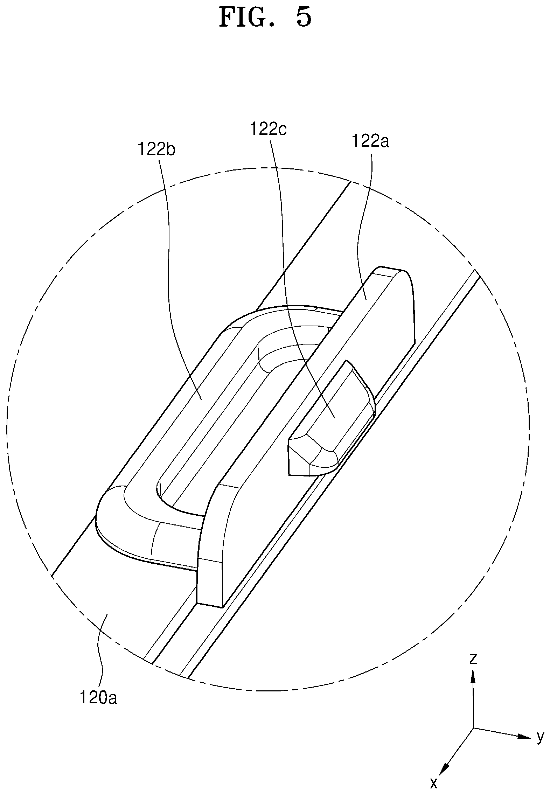

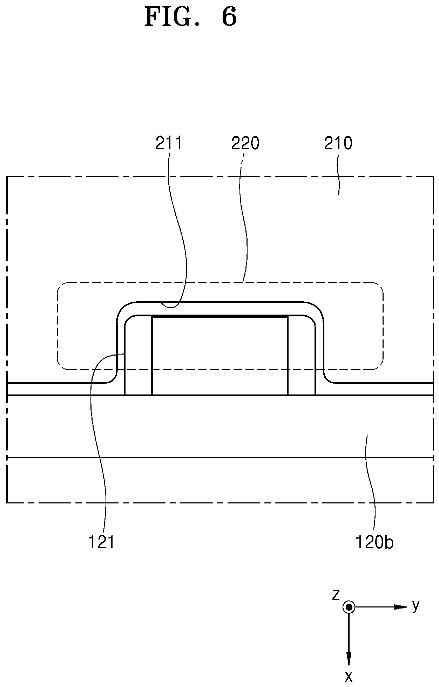

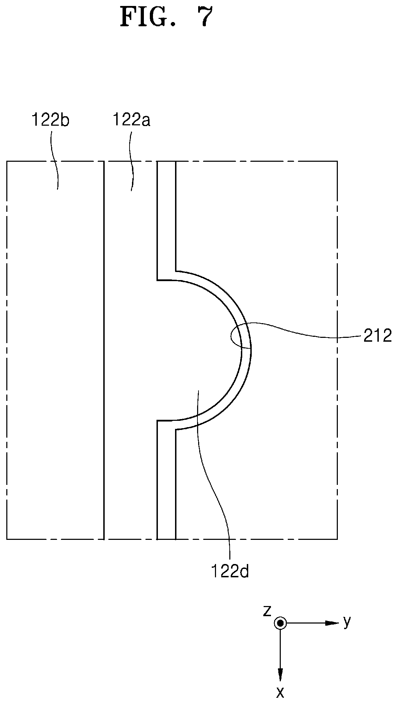

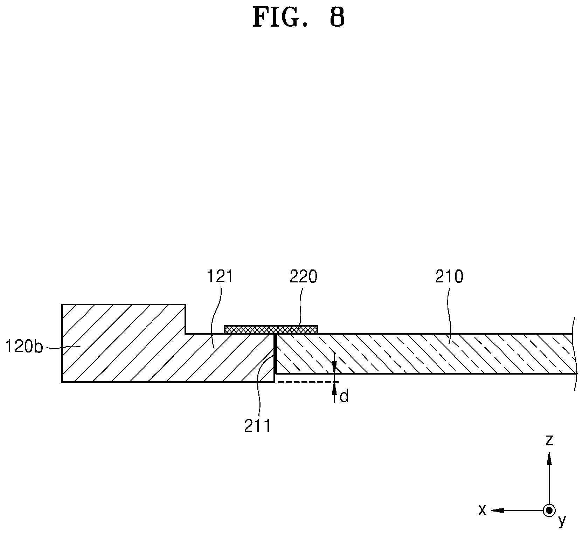

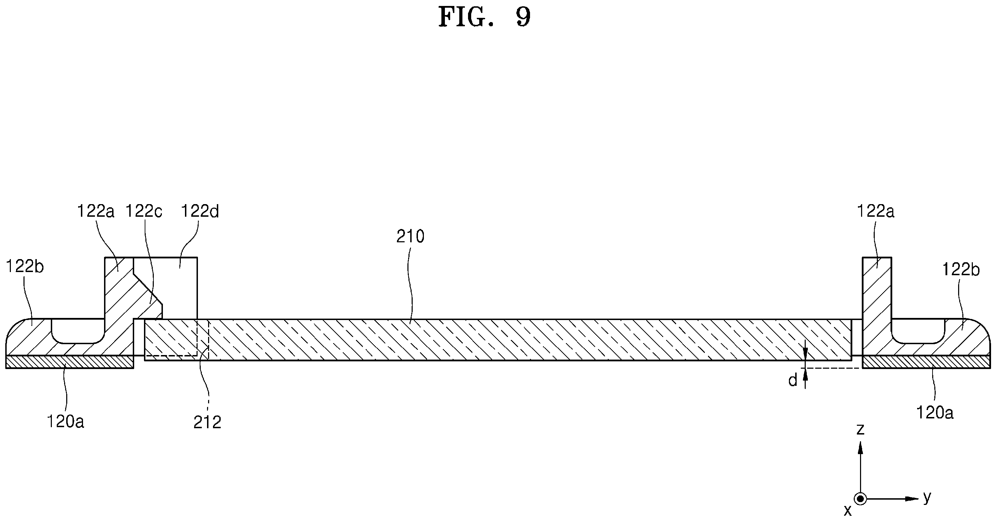

FIG. 5 shows an enlarged view of the portion B in FIG. 2, FIG. 6 shows an enlarged view of the portion C in FIG. 4, and FIG. 7 shows an enlarged view of the portion D in FIG. 4. FIG. 8 is a cross-sectional view taken along the line II-II' in FIG. 1, and FIG. 9 shows a cross-sectional view taken along the line III-III' in FIG. 1.

Referring to FIGS. 1, 2, and 4, the protection circuit board portion 200 may be mounted on the board mounting portion 120. In some embodiments, the protection circuit board portion 200 may be mounted on the board mounting portion 120 by being supported by each component of the board mounting portion 120 while being inserted into the inside of the board mounting portion 120.

Referring to FIG. 2, the board mounting portion 120 may accommodate the protection circuit board portion 200 with opposite surfaces of the protection circuit board portion 200 to be mounted being open (e.g., being exposed).

The board mounting portion 120 may support the protection circuit board portion 200 accommodated therein. For example, a contact support portion 121 may be formed on the board mounting portion 120 to protrude inwardly such that the protection circuit board portion 200 may be contact-supported in the thickness direction (e.g., the z-axis direction) of the battery module 10. Thus, the protection circuit board portion 200 may be mounted on the board mounting portion 120.

Referring to FIGS. 2, 6, and 8, the contact support portion 121 may be arranged inside a coupling groove 211 formed in the protection circuit board 210 of the protection circuit board portion 200 and may contact-support a cover tab 220 covering the coupling groove 211.

The contact support portion 121 may be arranged inside the coupling groove 211 formed in the protection circuit board portion 200. In some embodiments, the contact support portion 121 may be formed in a shape corresponding to the coupling groove 211 and may be arranged inside the coupling groove 211.

The contact support portion 121 may be arranged inside the coupling groove 211 to come into contact with the cover tab 220. The contact support portion 121 may support the protection circuit board 210 in the thickness direction (e.g., the z-axis direction) of the battery module 10 by supporting the cover tab 220 connected to the protection circuit board 210 in the thickness direction of the battery module 10. For example, the contact support portion 121 may be arranged inside the coupling groove 211 to contact-support the protection circuit board portion 200.

A top end of the contact support portion121 may come into contact with a bottom end of the cover tab 220 that covers the coupling groove 211. For example, a top end portion of the contact support portion 121 may be arranged at substantially the same height as a top end portion of the protection circuit board 210. As a result, the contact support portion 121 and the protection circuit board portion 200 may be arranged at the same position as each other in the thickness direction of the battery module 10 and may be arranged to overlap spatially in the thickness direction of the battery module 10.

Referring to FIG. 8, the contact support portion 121 may support the protection circuit board portion 200 through the cover tab 220 inside the coupling groove 211, thereby reducing a height at which the protection circuit board portion 200 is arranged by the thickness of the protection circuit board 210. For example, a height difference d between a bottom end portion of the protection circuit board portion 200 and a bottom end portion of the connection portion 120b may be substantially 0 or may converge within a range (e.g., a preset or predefined range).

Referring to FIGS. 1 and 2, a plurality of contact support portions 121 may be formed on the board mounting portion 120. The protection circuit board portion 200 may be stably mounted on the board mounting portion 120 by being supported by the plurality of contact support portions 121. As a load applied to each contact support portion 121 decreases (e.g., as a load is spread over more contact support portions 121), the structural stability of the battery module 10 may be improved.

In an embodiment, a pair of contact support portions 121 may be formed to protrude to face each other inside the board mounting portion 120. In some embodiments, the pair of contact support portions 121 may be formed to protrude inwardly from each connection portion 120b to face each other. Thus, the protection circuit board portion 200 may be supported at both ends thereof in the longitudinal direction and, thus, may be stably mounted on the board mounting portion 120.

Referring to FIGS. 1, 4, and 9, the board mounting portion 120 may support the protection circuit board portion 200 and the battery cell 300 by including a partition portion 122.

Referring to FIGS. 1, 2, and 5, the partition portion 122 may be mounted on the wing portion 120a of the board mounting portion 120. The partition portion 122 may be connected to the wing portion 120a having a width (e.g., a predetermined width) and may be stably mounted on the wing portion 120a. Thus, the protection circuit board portion 200 and the battery cell 300 may be more stably supported by the partition portion 122.

The board mounting portion 120 may include the partition portion 122 to support the protection circuit board portion 200 and the battery cell 300 in a width direction (e.g., a y-axis direction) of the protection circuit board portion 200. In some embodiments, the partition portion 122 of the board mounting portion 120 may be arranged between the protection circuit board portion 200 and the battery cell 300 such that a surface of the partition portion 122 may come into contact with the protection circuit board portion 200 and the other surface opposite thereto may come into contact with the battery cell 300, thereby contact-supporting the protection circuit board portion 200 and the battery cell 300.

Referring to FIGS. 4 and 5, the partition portion 122 may have a partition 122a and a reinforcing rib 122b.

The partition 122a may have a length (e.g., a predetermined length) and may be provided in a shape extending in the thickness direction (e.g., the z-axis direction) of the battery module 10. For example, the partition 122a may be formed in a plate shape having an area (e.g., a preset or predetermined area).

The partition 122a may have a surface coming into contact with the protection circuit board portion 200 and the other surface coming into contact with the battery cell 300. For example, the partition 122a may support the protection circuit board portion 200 and the battery cell 300 in a direction perpendicular to a surface of the partition (e.g., in the y-axis direction). Thus, the protection circuit board portion 200 and the battery cell 300 may be stably mounted on the board mounting portion 120 and the cell mounting portion 110 without shaking (e.g., without vibrating).

The reinforcing rib 122b may support the partition 122a. In some embodiments, the reinforcing rib 122b may support the partition 122a by connecting the partition 122a to the wing portion 120a.

The reinforcing rib 122b may have a thickness sufficient to support the partition 122a. For example, the partition 122a may be connected to the reinforcing rib 122b having a thickness, thereby coming into contact with the reinforcing rib 122b over a wider area.

The reinforcing rib 122b may be bent and connected to an end portion and the other end portion of the partition 122a. An end and the other end (e.g., the opposite end) of the reinforcing rib 122b may be connected to each end portion of the partition 122a, and reinforcing rib 122b may be bent to increase an area by which the reinforcing rib 122b comes into contact with the wing portion 120a. Thus, the reinforcing rib 122b may firmly support the partition 122a.

The board mounting portion 120 may include a plurality of partition portions 122. In some embodiments, the board mounting portion 120 may have the plurality of partition portions 122 arranged in the longitudinal direction of the wing portion 120a. As load applied from the battery cell 300 and the protection circuit board portion 200 is divided and applied to (e.g., spread over) the plurality of partition portions 122, the structural stability of the board mounting portion 120 may be improved.

The plurality of partition portions 122 arranged on the wing portion 120a may be arranged to be spaced apart from each other at regular (or preset) intervals. For example, the partition portions 122 adjacent to each other on the wing portion 120a may be arranged to be spaced apart from each other by the regular interval such that a space in which the electrode terminal 301 may be arranged may be provided in the interval. Thus, the electrode terminal 301 may be mounted on the cell mounting portion 110 and, thus, may be stably connected to the protection circuit board 210.

Referring to FIGS. 4, 5, and 9, a pressing support portion 122c may be formed in the partition portion 122. In some embodiments, the pressing support portion 122c may be formed on a side of the partition 122a of the partition portion 122 to protrude toward the inside of the board mounting portion 120.

The pressing support portion 122c may support the protection circuit board portion 200. In some embodiments, the pressing support portion 122c may be formed to protrude from the side of the partition 122a and may come into contact with a top portion of the protection circuit board portion 200. For example, the pressing support portion 122c may contact the top portion of the protection circuit board portion 200 and may support the protection circuit board portion 200 in a direction (e.g., a -z-axis direction) opposite to the direction in which the contact support portion 121 supports the protection circuit board portion 200.

The pressing support portion 122c may contact-support the protection circuit board portion 200 that is contact-supported by the contact support portion 121. For example, the pressing support portion 122c may contact-support the protection circuit board portion 200 supported in the thickness direction (e.g., the z-axis direction) of the battery module 10 by the contact support portion 121 in the direction opposite to the height direction (e.g., the -z-axis direction). Thus, the protection circuit board portion 200 may be mounted on the board mounting portion 120 without shaking.

A surface that comes into contact with the protection circuit board portion 200 of the pressing support portion 122c may be parallel to the protection circuit board portion 200. Because surfaces where the pressing support portion 122c and the protection circuit board portion 200 come into contact are arranged parallel to each other, an area by which the pressing support portion 122c comes into contact with the protection circuit board portion 200 may be increased or maximized. Thus, pressure applied by the pressing support portion 122c to the protection circuit board portion 200 may be reduced, thereby maintaining the durability of the protection circuit board portion 200.

A plurality of pressing support portions 122c may be formed in the partition portion 122. In some embodiments, the plurality of pressing support portions 122c may be formed to protrude from one partition portion 122 or one pressing support portion 122c may be formed in (or formed to protrude from) each partition portion 122. Thus, as the load applied to each of the pressing support portion 122c and the protection circuit board portion 200 is reduced, the durability of the battery module 10 may be improved.

Referring to FIGS. 4, 7, and 8, a catching support portion 122d may be formed in the partition portion 122. In some embodiments, the catching support portion 122d may be formed on a side of the partition 122a of the partition portion 122 to protrude toward the inside of the board mounting portion 120.

The catching support portion 122d may support the protection circuit board portion 200. In some embodiments, the catching support portion 122d may be formed to protrude from a side of the partition 122a toward the inside of the board mounting portion 120 and may be arranged inside a catching groove 212 formed in the protection circuit board portion 200. The catching support portion 122d may be arranged inside the catching groove 212 so that when the protection circuit board portion 200 moves in a direction parallel to the wing portion, the catching support portion 122d may support the protection circuit board portion 200 by contact-supporting the catching groove 212.

The catching support portion 122d may have a cylindrical shape. For example, the protection circuit board 210 may move in the thickness direction (e.g., the z-axis direction) of the battery module 10 while the catching support portion 122d is arranged inside the catching groove 212. Thus, the protection circuit board 210 may be easily mounted on the board mounting portion 120.

The plurality of catching support portions 122d may be formed on the partition portion 122. In some embodiments, the plurality of catching support portions 122d may be formed to protrude from one partition portion 122, or one catching support portion 122d may be formed in each partition portion 122. Thus, as the load applied to each of the catching support portion 122d and the protection circuit board portion 200 is reduced, the durability of the battery module 10 may be improved.

In FIGS. 2, 4, and 5, an embodiment in which either the pressing support portion 122c or the catching support portion 122d is formed on the partition portion 122, but the present disclosure is not limited thereto. In some embodiments, each of at least one pressing support portion 122c and at least one catching support portion 122d may be formed on one partition portion 122.

Referring to FIGS. 1, 2, and 4, the protection circuit board portion 200 may be mounted on the board mounting portion 120 and electrically connected to the battery cell 300. The protection circuit board portion 200 may control voltage and current of the connected battery cells 300 to adjust the output of the battery module 10 and to ensure stability during operation.

In an embodiment, the protection circuit board portion 200 may include the protection circuit board 210 and the cover tab 220.

The protection circuit board 210 may be electrically connected to the battery cell 300. In some embodiments, the protection circuit board 210 may be connected to the electrode terminal 301 drawn from a side of the battery cell 300 to receive electrical energy from the battery cell 300 and/or to control electrical energy output from the battery cell 300.

The protection circuit board 210 and the electrode terminal 301 of the battery cell 300 may be connected to each other, for example, by laser welding, but the present disclosure is not limited thereto.

A protection circuit for controlling voltage and current of the battery cell 300 may be formed on the protection circuit board 210. In some embodiments, the protection circuit may be printed on the protection circuit board 210 to monitor and control the voltage and current of the electrically connected battery cell 300. This may prevent overvoltage or overcurrent of the battery module 10.

Referring to FIGS. 1, 2, and 4, the protection circuit board 210 may be mounted on the board mounting portion 120. In some embodiments, the protection circuit board 210 may be accommodated in a space defined by the connection portion 120b and the wing portion 120a and, thus, may be supported by each component of the board mounting portion 120.

The protection circuit board 210 may be supported by the contact support portion 121. The protection circuit board 210 may be supported in the thickness direction (e.g., the z-axis direction) of the battery module 10 by the contact support portion 121 protruding toward the inside of the board mounting portion 120.

Referring to FIGS. 2, 6, and 8, the protection circuit board 210 may be supported by the contact support portion 121 through the cover tab 220.

In some embodiments, the protection circuit board 210 may have the coupling groove 211 formed in a side, such that the contact support portion 121 may be arranged inside the coupling groove 211 and the cover tab 220 covering the coupling groove 211 may be supported together by being contact-supported by the contact support portion 121.

The coupling groove 211 inside which the contact support portion 121 is arranged may be formed in the protection circuit board 210. In some embodiments, the coupling groove 211 having a shape corresponding to the contact support portion 121 may be formed on a side of the protection circuit board 210, such that when the contact support portion 121 is arranged inside the coupling groove 211, an inner circumferential surface of the coupling groove 211 may be supported in contact with the contact support portion 121.

The plurality of coupling grooves 211 may be formed in the protection circuit board 210. In some embodiments, a pair of coupling grooves 211 may be formed in a side of the protection circuit board 210 and the opposite side of the protection circuit board 210. The pair of coupling grooves 211 may be respectively covered by a pair of cover tabs 220 and supported by a pair of contact support portions 121 formed on the board mounting portion 120. For example, the protection circuit board 210 may be stably mounted on the board mounting portion 120 by being supported on opposite sides thereof.

The top end portion of the protection circuit board 210 may be arranged at substantially the same height as the top end portion of the contact support portion 121. For example, the top end of the contact support portion 121 may come into contact with the bottom end of the cover tab 220 covering the coupling groove 211 such that the contact support portion 121 and the protection circuit board 210 may be arranged at the same position as each other in the thickness direction (e.g., the z-axis direction) of the battery module 10. As a result, the contact support portion 121 and the protection circuit board 210 may be arranged at the same position (or the same level) as each other in the thickness direction (e.g., the z-axis direction) of the battery module 10 and may be arranged to overlap spatially in the thickness direction (e.g., the z-axis direction) of the battery module 10.

Referring to FIG. 8, the protection circuit board 210 may be supported by the contact support portion 121 through the cover tab 220 covering the coupling groove 211 such that the height at which the protection circuit board 210 is arranged may be lowered by the thickness of the protection circuit board 210. Thus, a height difference d between a bottom end portion of the protection circuit board 210 and the bottom end portion of the connection portion 120b may be substantially 0 or may converge within a range (e.g., a preset or predetermined range).

The protection circuit board 210 may be supported by the partition portion 122. The protection circuit board 210 may be supported by the partition portion 122 or in a direction perpendicular to the surface of the partition 122a (e.g., the y-axis direction) in a direction opposite to the direction supported by the contact support portion 121 (e.g., the -z-axis direction) or in a direction parallel to the wing portion 120a (e.g., the x-axis direction).

Referring to FIG. 9, the protection circuit board 210 may be supported by the partition 122a. In some embodiments, the protection circuit board 210 may be supported in the direction perpendicular to the surface of the partition 122a (e.g., the y-axis direction) by contacting a surface of the partition 122a.

Referring to FIGS. 4 and 6, the protection circuit board 210 may be supported by the pressing support portion 122c that is formed to protrude from the partition 122a. In some embodiments, the top portion of the protection circuit board 210 may come into contact with the pressing support portion 122c that protrudes from a side of the partition 122a.

For example, the protection circuit board 210 may be supported by the pressing support portion 122c in the direction (e.g., the -z-axis direction) opposite to the direction in which the protection circuit board 210 is supported by the contact support portion 121. Thus, the protection circuit board 210 may be mounted on the board mounting portion 120 without excessive shaking.

Referring to FIGS. 8 and 9, the protection circuit board 210 may come into contact with the contact support portion 121 and, at the same time, the pressing support portion 122c. In some embodiments, the protection circuit board 210 may be supported in the thickness direction (e.g., the z-axis direction) of the battery module 10 by the contact support portion 121 and, at the same time, may be supported in the direction (e.g., the -z-axis direction) opposite to the direction in which the protection circuit board 210 is supported by the contact support portion 121 by the pressing support portion 122c. Thus, the protection circuit board 210 may be stably mounted on the board mounting portion 120 without shaking in the height direction.

Referring to FIGS. 4 and 7, the protection circuit board 210 may be supported by the catching support portion 122d that is formed to protrude from the partition 122a. In some embodiments, as the catching support portion 122d protruding from a side of the partition 122a is arranged inside the catching groove 212, the protection circuit board 210 may be supported by the catching support portion 122d.

The catching groove 212, inside which the catching support portion 122d is arranged, may be formed in the protection circuit board 210. In some embodiments, the catching groove 212 may be formed in a shape corresponding to the cross-section of the catching support portion 122d. Thus, when the catching support portion 122d is arranged inside the catching groove 212, the inner circumferential surface thereof may come into contact with the catching support portion 122d such that the protection circuit board 210 may be supported without shaking by the catching support portion 122d.

Referring to FIGS. 2 and 6 to 8, the cover tab 220 may cover the coupling groove 211. The cover tab 220 may cover the top portion of the coupling groove 211 and may come into contact with the contact support portion 121 arranged inside the coupling groove 211.

The cover tab 220 may be connected to the protection circuit board 210 while covering the coupling groove 211. Thus, the cover tab 220 may transmit a supporting force applied from the contact support portion 121 to the protection circuit board 210.

In some embodiments, the cover tab 220 may be connected to the protection circuit board 210 by a method such as laser welding, but the present disclosure is not limited thereto.

The cover tab 220 may be contact-supported by the contact support portion 121. In some embodiments, the cover tab 220 may cover the coupling groove 211 and may come into contact with the top end portion of the contact support portion 121 inserted into the inside of the coupling groove 211.

Referring to FIGS. 7 and 8, the bottom end portion of the cover tab 220 may concurrently (or simultaneously) come into contact with the top end portion of the contact support portion 121 and the top end portion of the protection circuit board 210.

Thus, the cover tab 220 may transmit the supporting force applied from the contact support portion 121 to the protection circuit board 210 while maintaining the same height at which the contact support portion 121 and the protection circuit board 210 are arranged.

The protection circuit board portion 200 may include the plurality of cover tabs 220. In some embodiments, when a pair of coupling grooves 211 are formed in a side of the protection circuit board 210 and the opposite side of the protection circuit board 210, the protection circuit board portion 200 may include a pair of cover tabs 220 to cover each of the pair of coupling grooves 211.

Each cover tab 220 may cover the coupling groove 211 such that opposite sides of the protection circuit board portion 200 may be supported by the contact support portion 121. Thus, the protection circuit board portion 200 may be stably mounted on the board mounting portion 120.

Referring to FIGS. 1 and 2, the battery cell 300 may store electrical energy and transmit the same to the outside and may be mounted on the cell mounting portion 110 such that voltage and current of the battery cell 300 may be controlled by the protection circuit board portion 200.

The battery cell 300 may be formed in the shape of a plate. The battery cell 300 may be, for example, a pouch-shaped cell, but the present disclosure is not limited thereto. Thus, the thickness of the battery module 10 may be thin.

The battery cell 300 may be mounted on the cell mounting portion 110. In some embodiments, the battery cell 300 may be contact-supported by the cell mounting portion 110 and may be stably mounted on the cell mounting portion 110.

Referring to FIG. 2, the battery cell 300 may be supported by the cell mounting portion 110. In some embodiments, the cell mounting portion 110 may be formed in a shape corresponding to the battery cell 300 and may support the battery cell 300 mounted on the cell mounting portion 110 with the inner circumferential surface thereof.

The battery cell 300 may be supported by the support rib 111 formed on the cell mounting portion 110. In some embodiments, the battery cell 300 may be supported in the thickness direction (e.g., the z-axis direction) of the battery module 10 by the support rib 111 extending along the inner circumferential surface of the cell mounting portion 110 with a width. Thus, the battery cell 300 may be stably mounted by the cell mounting portion 110.

Referring to FIG. 1, the battery cell 300 may be supported by the partition portion 122. In some embodiments, the battery cell 300 may be supported by the partition 122a of the partition portion 122 arranged between the protection circuit board 210 and the battery cell 300.

The electrode terminal 301 may be drawn from a side of the battery cell 300. In some embodiments, the electrode terminal 301, connected to an electrode assembly accommodated inside the battery cell 300, may be drawn from a side of the battery cell 300.

The battery cell 300 may be electrically connected to other components. In some embodiments, the battery cell 300 may be electrically connected to another component through the electrode terminal 301 that extends from the electrode assembly of the battery cell 300 and is drawn out from the side of the battery cell 300. In some embodiments, the electrode terminal 301 of the battery cell 300 may be electrically connected to the protection circuit board 210 to electrically connect the protection circuit board 210 to the electrode assembly. For example, the battery cell 300 may be electrically connected to the protection circuit board 210 through the electrode terminal 301.

The electrode terminals 301 may be arranged between the partition portions 122 mounted adjacent to each other on the wing portion 120a. In some embodiments, the electrode terminal 301 may be connected to the protection circuit board 210 through a space provided between the partition portions 122 mounted adjacent to each other. Thus, electrical connection between the electrode terminal 301 and the protection circuit board 210 may be stably maintained.

Hereinafter, the configuration, operating principle, and effects of the battery module 10 and a mobile device including the same according to an embodiment of the present disclosure will be described.

Referring to FIGS. 1 and 2, the battery module 10, according to an embodiment of the present disclosure, may include the frame 100, the protection circuit board portion 200, and the battery cell 300.

The frame 100 may provide a space in which the battery cell 300 and the protection circuit board portion 200 may be mounted. The frame 100 may include a component that supports each of the battery cell 300 and the protection circuit board portion 200 to stably mount the battery cell 300 and the protection circuit board portion 200.

Referring to FIG. 2, the frame 100 may include the cell mounting portion 110 and the board mounting portion 120.

The cell mounting portion 110 may support the battery cell 300 mounted thereon. In some embodiments, the cell mounting portion 110 may be formed in a shape corresponding to the battery cell 300 such that the inner circumferential surface thereof may contact-support the battery cell 300.

The cell mounting portion 110 may be formed to extend along inner circumferential surface thereof and may include the support rib 111 having a width sufficient to support the mounted battery cell 300 in the thickness direction (e.g., the z-axis direction) of the battery module 10.

Thus, the battery cell 300 may be stably mounted by the cell mounting portion 110.

The cell mounting portion 110 may include the fixing portion 112 connected to the outer circumferential surface thereof. The fixing portion 112 may connect the battery module 10 to an external component. In some embodiments, the fixing hole 112a may be formed in the fixing portion 112 such that the battery module 10 and the external component may be connected to each other by a bolt that passes through the fixing hole 112a and the external component.

Referring to FIGS. 1, 4, and 6 to 9, the protection circuit board portion 200 may support the board mounting portion 120 mounted thereon. Each component provided in the board mounting portion 120 may form a layout relationship that maintains the thickness of the battery module 10 as being slim while stably supporting the protection circuit board portion 200.

The board mounting portion 120 may form a space in which the protection circuit board portion 200 may be accommodated. In some embodiments, the board mounting portion 120 may include the pair of wing portions 120a and the connection portion 120b connecting end portions of the respective wing portions 120a, thereby forming a space in which the protection circuit board portion 200 may be arranged.

The board mounting portion 120 may support the protection circuit board 210 in the thickness direction (e.g., the z-axis direction) of the battery module 10. In some embodiments, the board mounting portion 120 may have the contact support portion 121 formed inwardly to support the protection circuit board portion 200.

In some embodiments, the board mounting portion 120 may be arranged inside the coupling groove 211 formed in the protection circuit board 210 and may support the cover tab 220 that covers the coupling groove 211. Thus, the thickness of the battery module 10 formed by mounting the protection circuit board 210 on the board mounting portion 120 may be reduced.

The board mounting portion 120 may support the protection circuit board 210 such that the protection circuit board 210 may be stably mounted without shaking.

Referring to FIGS. 2 and 9, the board mounting portion 120 may support the protection circuit board portion 200 including the partition portion 122 mounted on the wing portion 120a.

Referring to FIG. 9, the partition 122a of the partition portion 122 may support the protection circuit board portion 200 in a direction perpendicular to the surface of the partition 122a (e.g., the y-axis direction). In some embodiments, the partition 122a may be arranged between the protection circuit board portion 200 and the battery cell 300 to support the protection circuit board portion 200 without shaking.

The partition portion 122 may include the reinforcing rib 122b that supports the partition 122a. For example, the partition 122a may be supported by the reinforcing rib 122b that is connected to the partition 122a on a side thereof and to the wing portion 120a on the other side thereof such that the protection circuit board portion 200 and the battery cell 300 may be stably supported.

Referring to FIGS. 5 and 9, the pressing support portion 122c may be formed to protrude toward the inside of the board mounting portion 120 on the partition 122a to support the protection circuit board portion 200. In some embodiments, the pressing support portion 122c may contact the top portion of the protection circuit board portion 200 and support the protection circuit board portion 200 in the direction opposite to the direction in which the contact support portion 121 contact-supports the protection circuit board portion 200.

In some embodiments, the pressing support portion 122c may come into contact with the protection circuit board portion 200 that is in contact with the contact support portion 121 such that the protection circuit board portion 200 may be stably mounted on the board mounting portion 120 without shaking in the thickness direction (e.g., the z-axis direction) of the battery module 10.

Referring to FIGS. 7 and 9, the catching support portion 122d may be formed to protrude toward the inside of the board mounting portion 120 on the partition 122a to support the protection circuit board portion 200. In some embodiments, the catching support portion 122d may be arranged inside the catching groove 212 formed in the protection circuit board portion 200 to support the protection circuit board portion 200 in the direction parallel to the wing portion 120a (e.g., the x-axis direction).

Referring to FIG. 1, the protection circuit board portion 200 may be mounted on the board mounting portion 120 and may be electrically connected to the battery cell 300 to control the voltage and current of the battery cell 300.

In an embodiment, the protection circuit board portion 200 may include the protection circuit board 210 and the cover tab 220.

The protection circuit board 210 may be mounted on the board mounting portion 120 and may be supported by each component of the board mounting portion 120. In some embodiments, the protection circuit board 210 may be supported by the contact support portion 121 of the board mounting portion 120 and may be supported by the partition 122a, the pressing support portion 122c, and the catching support portion 122d of the partition portion 122.

Referring to FIGS. 6 and 8, the protection circuit board 210 may be mounted on the board mounting portion 120 while maintaining the thin thickness of the battery module 10. In some embodiments, the coupling groove 211 inside which the contact support portion 121 is arranged may be formed in the protection circuit board 210 such that the contact support portion 121 may support the cover tab 220 that is arranged inside the coupling groove 211 and covers the coupling groove 211.

The cover tab 220 may cover the coupling groove 211 formed in the protection circuit board 210. In some embodiments, the cover tab 220 may cover the coupling groove 211 and may be supported by the contact support portion 121 arranged inside the coupling groove 211.

The cover tab 220 may transmit the supporting force applied from the contact support portion 121 to the connected protection circuit board 210, allowing the protection circuit board 210 to be supported by the contact support portion 121.

The cover tab 220 may concurrently (or simultaneously) contact the top portion of the contact support portion 121 and the top portion of the protection circuit board 210. For example, the top portion of the contact support portion 121 and the top portion of the protection circuit board 210 may be arranged at the same height as each other by the cover tab 220.

The battery cell 300 may be mounted on the cell mounting portion 110 and supported by the inner circumferential surface of the cell mounting portion 110 and the support rib 111 formed along the inner circumferential surface of the cell mounting portion 110.

The electrode terminal 301 drawn from a side of the battery cell 300 may be connected to the electrode assembly accommodated inside the battery cell 300 to electrically connect the external component to the electrode assembly.

The electrode terminal 301 may be connected to the protection circuit board portion 200 through a space provided between adjacent partition portions 122 such that the voltage and current of the battery cell 300 may be controlled by the protection circuit board 210.

The mobile device may include the battery module 10 to receive power from the battery module 10. In some embodiments, the mobile device may be electrically connected to the protection circuit board portion 200 of the battery module 10 to receive electrical energy stored in the battery cell 300. The mobile device may receive electrical energy in a state where voltage and current are controlled within a range (e.g., a preset or predetermined range) by the protection circuit board 210 of the protection circuit board portion 200.

The mobile device including the battery module 10 may be, for example, a mobile phone, a tablet computer, or a laptop computer, but the present disclosure is not limited thereto.

In a battery module and a mobile device including the same according to an embodiment of the present disclosure, a battery cell and a protection circuit board may be mounted on a frame to maintain a slim shape of the battery module.

However, aspects and features of the present disclosure are not limited to the above-described aspects and features, and other aspects and features not mentioned may be clearly understood by those of ordinary skill in the art from the description of the present disclosure described below.

## Claims

1. A battery module (10) comprising:
a frame (100) comprising a cell mounting portion (110) on which a battery cell (300) is mounted, and a board mounting portion (120) connected to a side of the cell mounting portion (110); and
a protection circuit board portion (200) electrically connected to the battery cell (300) and mounted on the board mounting portion (120),
wherein the board mounting portion (120) comprises a contact support portion (121) protruding toward an inside of the board mounting portion (120) and contacting and supporting the protection circuit board portion (200).

2. The battery module (10) as claimed in claim 1, wherein the board mounting portion (120) accommodates the protection circuit board portion (200) and has opposite surfaces being open.

3. The battery module (10) of claim 1 or 2, wherein the protection circuit board portion (200) comprises:
a protection circuit board (210) configured to control voltage and current of the battery cell (300), wherein a coupling groove (211) is formed in a side of the protection circuit board (210); and
a cover tab (220) covering the coupling groove (211), and
wherein the contact support portion (121) is arranged inside the coupling groove (211) and contacts and supports the cover tab (220).

4. The battery module (10) as claimed in claim 3, wherein the coupling groove (211) is formed in the side of the protection circuit board (210) and a further coupling groove is formed in an opposite side of the protection circuit board (210),
wherein a further cover tab (220) covering the further coupling groove is provided, and
wherein a further contact support portion (121) protrudes from the board mounting portion (120) inside the further coupling groove (211) to contacts and supports the further cover tab (220).

5. The battery module (10) as claimed in any of claims 1 to 4, wherein the board mounting portion (120) comprises:
a pair of wing portions (120a) on which an electrode terminal (301) drawn from a side of the battery cell (300) is arranged;
a connection portion (120b) connecting the wing portions (120a) to each other; and
a partition portion (122) mounted on each of the wing portions (120a) and arranged between the battery cell (300) and the protection circuit board portion (200).

6. The battery module (10) as claimed in claim 5, wherein the partition portion (122) comprises:
a partition (122a) supporting the battery cell (300) and the protection circuit board portion (200); and
a reinforcing rib (122b) supporting the partition (122a).

7. The battery module (10) as claimed in claim 5 or 6, wherein the partition portion (122) comprises a pressing support portion (122c) protruding toward the inside of the board mounting portion (120), and
wherein the pressing support portion (122c) supports the protection circuit board portion (200) in a direction opposite to a direction in which the contact support portion (121) supports the protection circuit board portion (200).

8. The battery module (10) as claimed in claim 7, wherein the protection circuit board portion (200) contacts the contact support portion (121) and the pressing support portion (122c) simultaneously.

9. The battery module (10) as claimed in any of claims 5 to 8, wherein the partition portion (122) includes a catching support portion (122d).

10. The battery module (10) as claimed in any of claims 5 to 8, wherein the board mounting portion (120) includes a plurality of partition portions (122), wherein at least selected of the partition portions (122) are arranged adjacent to each other on one of the wing portions (120a).

11. A mobile device comprising a battery module (10), wherein the battery module (10) is the battery module (10) of any of the previous claims.
